# EUROPÄISCHE PATENTANMELDUNG

(11) **EP 2 293 011 A1**
(43) Veröffentlichungstag der Anmeldung: **09.03.2011**
(21) Anmeldenummer: 09011448.9
(22) Anmeldetag: 07.09.2009
(51) Int. Cl.: G01B 11/245, G01B 21/20, G01B 5/20, F01D 5/30, B23C 3/18

(54) **Prüfvorrichtung, Prüfapparatur und Prüfverfahren für Profilnuten**

(71) Anmelder: SIEMENS AKTIENGESELLSCHAFT, 80333 München (DE)
(72) Erfinder: Knoche, Wolfram, 46487 Wesel (DE); König, Niels, 52068 Aachen (DE)

(57) **Zusammenfassung**

Nach einem ersten Gesichtspunkt der vorliegenden Erfindung weist eine Prüfvorrichtung zur Prüfung des Querschnittsprofils von Profilnuten, insbesondere von Tannennuten, auf: einen im Wesentlichen prismatischen Prüfkörper (1) mit einem Querschnittsprofil, das dem Querschnittsprofil der zu prüfenden Profilnut wenigstens in interessierenden Konturabschnitten, insbesondere Tragschultern (5) und Nutgrund der Tannennuten, nachempfunden ist, wobei die Querschnittsgröße des Prüfkörpers (1) kleiner als diejenige der Nut ist, und eine Gruppe von Abstandssensoren (16, 17), die in Messflächen (5a, 6a, 7a) des Prüfkörpers (1), vorzugsweise senkrecht zu diesen, angeordnet sind, wobei die Messflächen (5a, 6a, 7a) interessierenden Konturabschnitten der Profilnut, insbesondere Anlageflächen der Tannennut, entsprechen.

## Beschreibung

Die vorliegende Erfindung betrifft einen Prüfkörper und eine Prüfvorrichtung für Profilnuten, insbesondere für Tannennuten in Laufrädern zur Befestigung von Laufschaufeln bei Turbinen wie etwa Dampfturbinen von Kraftwerken.

Laufschaufeln von Turbinen insbesondere größerer Bauart, wie sie in Kraftwerken verwendet werden, sind üblicherweise mit ihrem Schaufelfuß einzeln in profilierten Nuten gelagert, die teilweise wendelförmig in die äußere Zylinderoberfläche der Laufräder eingearbeitet sind. Die sich zum Nutgrund hin verjüngenden Nutflanken weisen mehrere, üblicherweise drei, gegenüberliegende Paare von Längsrillen auf, wodurch sich eine typische Querschnittsform des Nutprofils ergibt, die auch als "Tannennut" bezeichnet wird. Die jeweiligen Oberseiten der Rillen bilden Tragschultern, gegen die sich die entsprechenden Gegenschultern der Schaufelfüße abstützen. Bei typischen Bauteildurchmessern im Bereich einiger Meter liegen die Toleranzen für die Abstandsabweichung der gegenüberliegender Tragschultern zueinander bei 0 bis -0,02 mm, für die Parallelitätsabweichung der Tragschultern zur Sollkontur ebenfalls bei 0 bis -0,02 mm, für die Breitenabweichung der Nut zwischen +0,3 und -0,1 mm, für die Höhenabweichung im Bereich um 0,01 mm und für Abweichung des Krümmungsradius im Bereich um 0,02 mm.

Die Tannennuten sind im Betrieb stark belastet und stellen daher hohe Anforderungen an die Fertigung und Qualitätssicherung. Zurzeit werden bei der Herstellung der Profilnuten in Turbinenläufern beide Nutflanken in einem Schnitt gemeinsam gefräst. Wird hierbei die Schnittgeschwindigkeit unter Einsatz geeigneter Werkzeuge auf ein Vielfaches gesteigert, erhält man nur im Gleichlauffräsverfahren die geforderte Oberflächengüte, weshalb beide Seiten einzeln gefräst werden müssen. Hierbei kommt es zu neuen Fehlerquellen. Der Fräser wird durch den einseitigen Eingriff abgedrängt und die Bahnen können exzentrisch oder höhenversetzt gefräst werden.

Bisher ist es nicht möglich, die hierbei möglichen Fertigungsfehler messtechnisch zu erfassen. Da also kein geeignetes Verfahren zur Prüfung des am engsten tolerierten Profilbereichs, nämlich der Tragschultern des Profils, bekannt ist, werden die Profilnuten mit einem zuvor vermessenen, entsprechend protokollierten und für gut befundenen Profilfräser hergestellt. Durch das Fertigfräsen in einem Schnitt ist sichergestellt, dass das gefräste Nutprofil dem gemessenen Fräserprofil entspricht. Somit kann auf eine reguläre Vermessung des Nutprofils verzichtet werden. Eine Gut-/Schlecht-Beurteilung ist zusätzlich durch eine lehrende Prüfung möglich.

Eine geometrische Messung des Nutprofils ist mit Koordinatenmessgeräten und taktilen Tastern möglich, jedoch nur für in dafür zugänglichen Räumen, welche in der Regel nur am Anfang und Ende der Nut zur Verfügung stehen. Dies schließt eine durchgängige Nutprüfung zur Abnahmeprüfung und zur Kontrolle des Fertigungsprozesses aus. Zusätzlich ist die Messzeit einer solchen Prüfung zu lang und nicht werkergerecht.

Eine Aufgabe der Erfindung besteht darin, eine Prüfvorrichtung, eine Prüfapparatur und ein Prüfverfahren für Profilnuten, insbesondere von Tannennuten in Laufrädern zur Befestigung von Laufschaufeln bei Turbinen bereitzustellen, die es ermöglichen, Fertigungsfehler hochgenau, zuverlässig und über die gesamte Länge der Nut festzustellen.

Nach einem ersten Gesichtspunkt der vorliegenden Erfindung weist eine Prüfvorrichtung zur Prüfung des Querschnittsprofils von Profilnuten, insbesondere von Tannennuten, auf: einen im Wesentlichen prismatischen Prüfkörper mit einem Querschnittsprofil, das dem Querschnittsprofil der zu prüfenden Profilnut wenigstens in interessierenden Konturabschnitten, insbesondere Tragschultern und Nutgrund der Tannennuten, nachempfunden ist, wobei die Querschnittsgröße des Prüfkörpers kleiner als diejenige der Nut ist, und eine Gruppe von Abstandssensoren, die in Messflächen des Prüfkörpers, vorzugsweise senkrecht zu diesen, angeordnet sind, wobei die Messflächen interessierenden Konturabschnitten der Profilnut, insbesondere Anlageflächen der Tannennut, entsprechen.

Ein Prüfkörper nach diesem Gesichtspunkt ist somit im Querschnitt wie ein Schaufelfuß einer in der Nut zu befestigenden Laufschaufel ausgebildet. Er bildet, bezogen auf einen radialen Schnitt durch den Kreisbogen, den die Schaufelnut beschreibt, das Gegenstück zu dem als Anlageflächen für die Schaufelfüße (Tragschultern) ausgebildeten Profilbereich. Da der Prüfkörper insgesamt kleiner als die Nut ist, kann er in die Nut eingesetzt und über die gesamte Länge der Nut bewegt werden. Mit den in den Messflächen angeordneten Abstandssensoren kann der Abstand derselben von den interessierenden Konturabschnitten der Nut, d.h., den Anlageflächen der Tannennut, bestimmt werden. Da die Kontur des Prüfkörpers und die Lage der Abstandssensoren bekannt ist, kann somit die Geometrie der Nut in dem Prüfquerschnitt bestimmt werden.

Wenn die Abstandssensoren in einer Querschnittsebene des Prüfkörpers angeordnet sind, definiert diese Querschnittsebene den Prüfquerschnitt. Vorzugsweise sind die Sensoren in der mittleren Querschnittsebene des Prüfkörpers angeordnet, sodass die Symmetrie des Prüfkörpers ausgenutzt werden kann.

Mit wenigstens einer weiteren Gruppe von Abstandssensoren, die jeweils in einer zu der Querschnittsebene der Abstandssensoren parallelen, zweiten Querschnittsebene des Prüfkörpers angeordnet sind, ist es möglich, eine Fehlstellung der Vorrichtung festzustellen und in der Auswertung auszugleichen. Diese parallele Messebene definiert eine sekundäre Messebene.

Vorzugsweise sind mehrere Teilkörper gleichen Querschnitts miteinander verbunden, um den Prüfkörper auszubilden, wobei die Abstandssensoren jeweils in der Verbindungsebene zweier Teilkörper angeordnet sind. Eine solche Anordnung erleichtert die Anordnung der Abstandssensoren und der erforderlichen Zuleitungen, insbesondere wenn in den Verbindungsflächen der Teilkörper Ausnehmungen und Rillen zur Aufnahme der Abstandssensoren und Zuleitungen ausgebildet sind.

Speziell weist die Querschnittsform des Prüfkörpers eine im wesentlichen trapezförmige Grundform, wobei die schrägen Seiten den Nutflanken entsprechen und die schmale der parallelen Seiten dem Nutgrund entspricht und eine Messfläche definiert, und mehrere, vorzugsweise zwei oder drei, von den schrägen Seiten abragenden, sich nach außen verjüngenden und zum Nutgrund hin kleiner werdenden Vorsprüngen auf, wobei die nach oben weisenden Seiten der Vorsprünge jeweils eine Messfläche definieren. Auf diese Weise ist der Prüfkörper auf die Profilform einer Tannennut in Laufrädern zur Befestigung von Laufschaufeln bei Turbinen angepasst.

In einer Ausgestaltung der Erfindung sind in der zweiten Messebene in der dem Nutgrund gegenüberliegenden Messfläche wenigstens zwei Abstandssensoren angeordnet. Eine solche Anordnung erleichtert die Anwendung des Verfahrens bei engen Messbereichen, während bei weiterem Messbereich an dieser Stelle ein Abstandssensor ausreichen kann.

In einer weiteren Ausgestaltung der Erfindung sind Messflächen vorgesehen, die jeweils einem Konusabschnitt der Nut gegenüberliegen, und ist in jeder einem Konusabschnitt der Nut gegenüberliegenden Messfläche wenigstens ein Abstandssensor vorgesehen. Durch das Messen der Abstände auf dem Innenkonus kann der Konuswinkel und damit die bei einem seriellen Fräsen der Nutflanken auftretende seitliche Abdrängung des Fräsers, unabhängig von anderen Einflüssen wie z.B. Fehler am Tragflankenwinkel, ermittelt werden. Ist der tatsächliche Konuswinkel am Profilfräswerkzeug bekannt, können die geometrischen Abweichungen, die sich aus der seitlichen Fräserabdrängung und einem Fehler am Tragflankenwinkel ergeben, differenziert werden. Dadurch, dass diese beiden Störgrößen jeweils unabhängig voneinander quantifizierbar sind, kann die Nutbreite für jede erforderliche Bezugsebene unabhängig von etwaigen Winkelfehlern bestimmt werden. Die beiden Abstandssensoren eines jeden Konusabschnitts sind übereinanderliegend platziert und ihren entsprechenden Abstandssensoren an dem anderen Konusabschnitt gegenüberliegend angeordnet.

Vorzugsweise weist die Prüfvorrichtung eine Abdrückeinrichtung zum Abdrücken des Prüfkörpers vom Nutgrund auf. Die Abdrückeinrichtung weist insbesondere einen in einer Axialbohrung des Prüfkörpers eingesetzten Pneumatikzylinder und einen Stempel, der mittels der Wirkung des Pneumatikzylinders von der Bodenfläche des Prüfkörpers ausfahrbar ist, auf. So kann der Prüfkörper gegen die oberen Anlageflächen der Nut gedrückt und an diesen ausgerichtet und für die Messung in der Nut fixiert werden. Die Einsätze können austauschbar sein. Alternativ kann bevorzugt die Abdrückeinrichtung elektromechanisch angetrieben sein.

Vorzugsweise sind in den auf den nach oben weisenden Seiten der oberen Vorsprünge definierten Messflächen jeweils ein oder zwei Nuten ausgebildet, in welchen jeweils ein Einsatz aus einem verschleißfesten Material angeordnet und befestigt ist, wobei die Einsätze sich geringfügig über die Messflächen erheben. So wird ein definierter Soll-Abstand der Messflächen von den Anlageflächen der Nut vorgegeben, ein stabiler Sitz der Messeinrichtung in der Nut erreicht und ein Verschleiß der Messflächen bei häufigem Einsatz vermieden.

Besonders bevorzugt sind die Abstandssensoren faseroptische Abstandssensoren, deren Ferrulen sich in den Messflächen öffnen und deren Lichtleitfasern im Inneren des Prüfkörpers verlegt sind. Die Verwendung von faseroptischen Abstandssensoren in einem der Form der Nut angepassten Prüfkörper erlaubt eine hochgenaue Vermessung des Nutquerschnitts und eine kompakte Bauform. Die faseroptischen Abstandssensoren integrieren den eigentlichen Messfühler (die Ferrule) mit der Zuleitung (den Lichtleitfasern). Die Ferrulen können hochgenau in entsprechenden Ausnehmungen platziert werden und definieren durch ihr vorderes Ende die Sensorposition. Besonders vorteilhaft sind die Ferrulen aus einem keramischen Material hergestellt und sind die Lichtleitfasern darin fixiert.

Nach einem weiteren Gesichtspunkt der vorliegenden Erfindung weist eine Prüfapparatur zur Prüfung des Querschnittsprofils von Profilnuten, insbesondere von Tannennuten, einen wie vorstehend beschriebenen Prüfkörper und ein Steuergerät, das zum Ansteuern der Abstandssensoren und ggf. der Abdrückeinrichtung, zum Empfangen und Auswerten von Signalen von den Abstandssensoren, und zum Ausgeben von Auswertungsergebnissen eingerichtet ist. Es kann auch eine Speichereinrichtung zum Speichern der Auswertungsergebnisse vorgesehen sein. Mit einer solchen Apparatur können die Signale der Abstandssensoren ausgewertet und sichtbar gemacht werden. Außerdem ist eine systematische und automatische Prüfung mehrerer Prüfquerschnitte möglich.

Nach einem weiteren Gesichtspunkt der vorliegenden Erfindung weist ein Verfahren zum Prüfen des Querschnittsprofils von Profilnuten, insbesondere von Tannennuten, die Schritte auf: Einsetzen eines wie vorstehend beschriebenen Prüfkörpers; Bewegen des Prüfkörpers entlang der Nutlängsrichtung bis zu einem vorbestimmten Prüfquerschnitt; Bewegen des Prüfkörpers in vertikaler Richtung bis zu einem Aufsetzen des Prüfkörpers an dem Nutprofil; Aktivieren der Abstandssensoren und Empfangen von Signalen von diesen; und Ermitteln und vorzugsweise Ausgeben eines Abstandswerts für jeden Abstandssensor. Gegebenenfalls können die Abstandswerte gespeichert werden.

Im Folgenden werden bevorzugte Ausführungsformen einer erfindungsgemäßen Prüfvorrichtung anhand der beigefügten schematischen Zeichnungen erläutert.

Es zeigt:
- Fig. 1: eine perspektivische Gesamtansicht eines Prüfkörpers nach einem ersten Ausführungsbeispiel der Erfindung;
- Fig. 2: eine Explosionsdarstellung des Prüfkörpers aus Fig. 1;
- Fig. 3: ein Hauptstück des Prüfkörpers aus Fig. 1 und 2 mit Abstandssensoren;
- Fig. 4: einen unteren Bereich des Hauptstücks aus Fig. 3 in vergrößerter Ansicht und in etwas unterschiedlicher Perspektive;
- Fig. 5: einen Werkstückabschnitt mit einer Tannennut mit ein- gesetztem Prüfkörper;
- Fig. 6: einen Kalibrierkörper mit einer Tannennut mit einge- setztem Prüfkörper;
- Fig. 7: eine Explosionsdarstellung eines Prüfkörpers gemäß einem zweiten Ausführungsbeispiel der Erfindung;
- Fig. 8: ein Hauptstück des Prüfkörpers aus Fig. 7 in etwas unterschiedlicher Perspektive; und
- Fig. 9: einen unteren Bereich des Hauptstücks aus Fig. 8 in vergrößerter Ansicht und in erneut etwas unterschied- licher Perspektive.

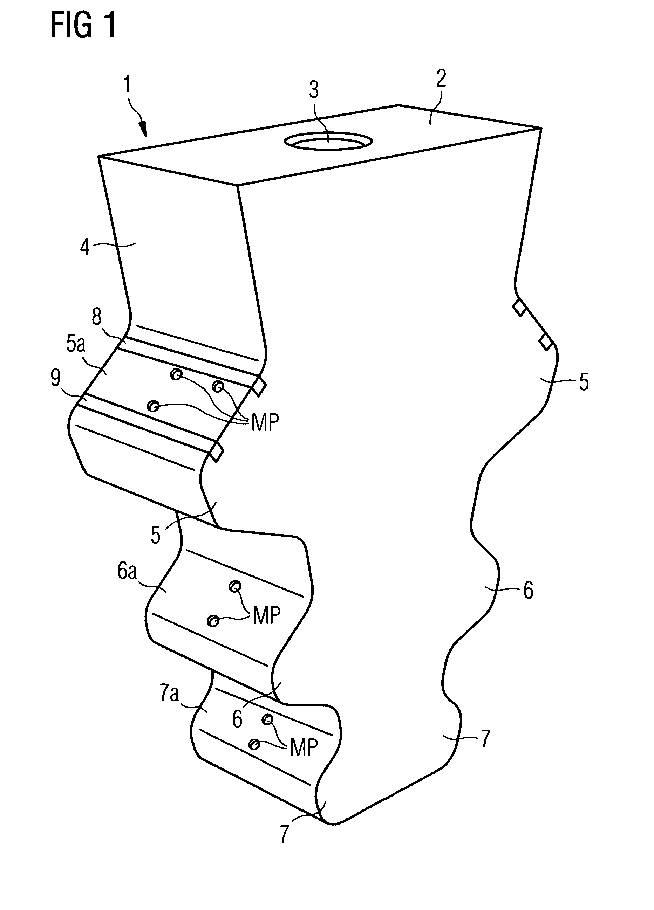

Zunächst wird der Aufbau und die Verwendung eines Prüfkörpers 1 der vorliegenden Erfindung anhand der Darstellung in Fig. 1 bis 4 erläutert.

Fig. 1 zeigt den Prüfkörper 1 als ein erstes Ausführungsbeispiel in perspektivischer Gesamtansicht.

Der Prüfkörper 1 weist eine prismatische Kontur auf mit einem symmetrisch-trapezförmigen Grundquerschnitt, von welchem mehrere seitliche Vorsprünge (weiter unten genauer beschrieben) abragen. Die parallelen Seiten des Trapezes beschreiben eine Oberseite und eine Unterseite (Bodenfläche) des Prüfkörpers 1. Eine Anschlussfläche 2 des Prüfkörpers 1, die durch die Oberseite des trapezförmigen Grundquerschnitts definiert wird, stößt an eine nicht näher definierte Werkzeugaufnahme zur Führung und Halterung des Prüfkörpers 1. Eine Axialbohrung 3 erstreckt sich in der Symmetrieachse des Prüfkörpers 1 von der Anschlussfläche 2 aus durch den Prüfkörper 1 hindurch.

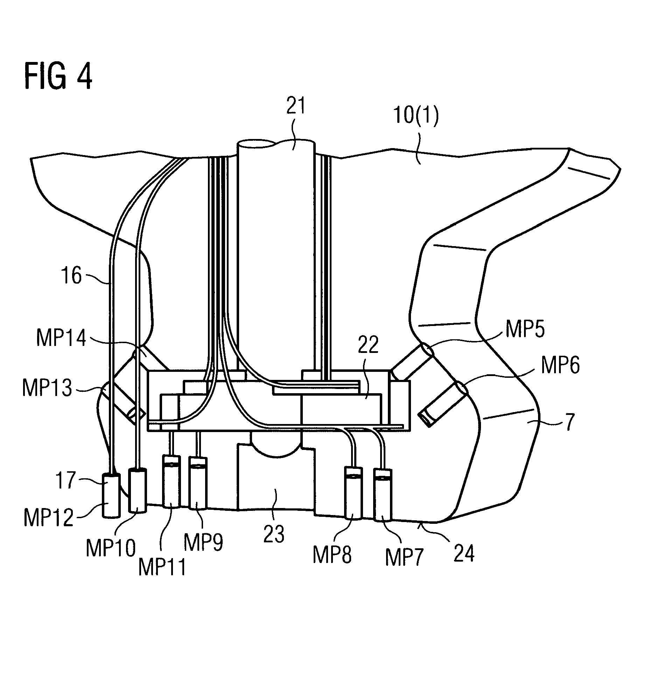

Die schrägen Seiten des trapezförmigen Querschnitts definieren laterale Seiten oder Flanken 4 des Prüfkörpers. Von beiden Flanken 4 weisen jeweils drei Vorsprünge 5, 6, 7 von dem trapezförmigem Grundquerschnitt nach außen ab. Der obere Vorsprung 5 und der mittlere Vorsprung 6 sind beidseits von der jeweiligen Flanke 4 begrenzt, während der untere Vorsprung 7 in die Bodenfläche (in Fig. 4 mit 24 bezeichnet) des Prüfkörpers 1 übergeht. Die Querschnittsform des Prüfkörpers 1 ist an ein zu prüfendes Nutprofil (hier einer Tannennut) angepasst, wobei zwischen den Seiten des Prüfkörpers 1 und der Nut ein Spiel vorhanden ist. Dabei entsprechen die Flanken 4 des Prüfkörpers 1 in etwa den Nutflanken und entspricht die Bodenfläche des Prüfkörpers 1 in etwa dem Nutgrund. Die Oberseiten der Vorsprünge 5, 6, 7 bilden jeweilige Messflächen 5a, 6a, 7a, die jeweiligen Anlageflächen der Tannennut entsprechen und in etwa den Tragschultern eines Laufradfußes nachgebildet sind.

In der Messfläche 5a der oberen Vorsprünge 5 sind jeweils zwei Stege 8, 9 eingelassen. Die Stege 8, 9 erlauben eine definierte Ausrichtung des Prüfkörpers 1 an den obersten Anlageflächen der Nut. Die Stege 8, 9 sind aus Hartmetall oder einem anderen geeigneten, insbesondere verschließfesten Werkstoff hergestellt und verbessern die Verschleißeigenschaften des Prüfkörpers 1.

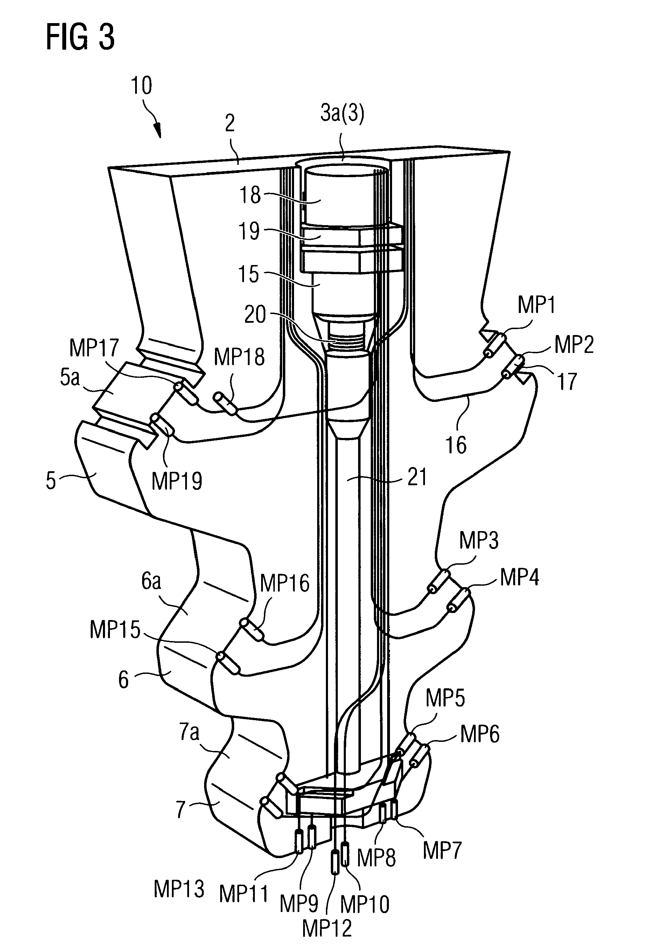

Auf bzw. in den Messflächen 5a, 6a, 7a sind Messpunkte MP angeordnet, die weiter unten im Zusammenhang mit Fig. 3 und 4 genauer beschrieben werden.

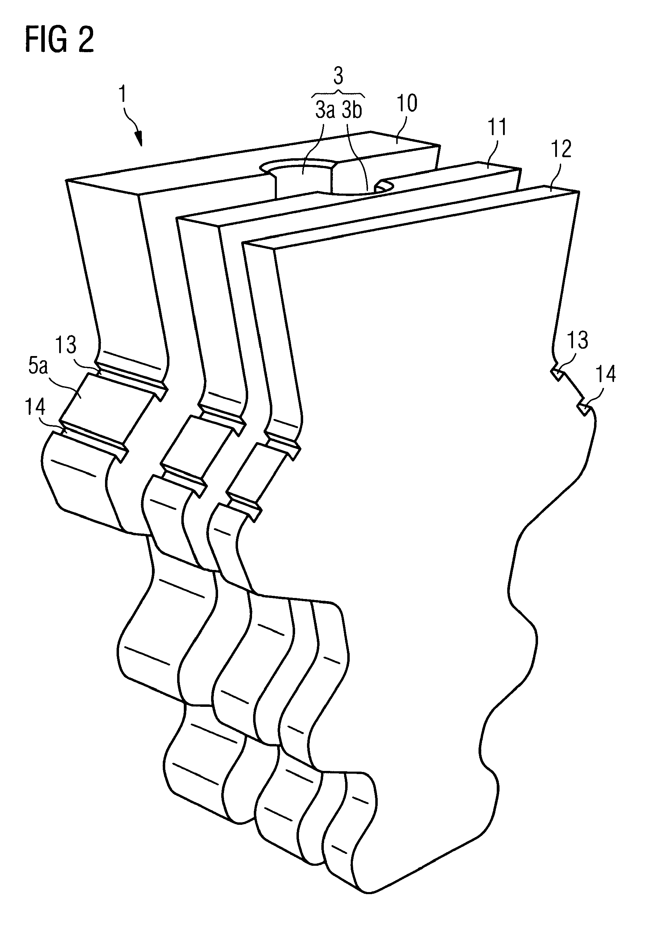

Fig. 2 zeigt in einer Explosionsansicht einen dreiteiligen Aufbau des Prüfkörpers 1, wie er in Fig. 1 nicht sichtbar ist.

Gemäß der Darstellung in Fig. 2 besteht der Prüfkörper 1 aus einem Hauptstück 10, einem Mittelstück 11 und einem Endstück 12, die jeweils die gleiche prismatische Kontur aufweisen und in Profilrichtung aneinanderliegen. Das Hauptstück 10 ist genauso dick wie das Mittelstück 11 und das Endstück 12 zusammen. Aus der Figur wird deutlich, dass die Bohrung 3 in einer in axialer Richtung verlaufenden Ebene geteilt ist und zu einem ersten Anteil 3a in dem Hauptstück 10 und zu einem zweiten Anteil 3b in dem Mittelstück 11 verläuft.

In der Figur ist auch auf jeder der oberen Tragschultern 5 eine innere Nut 13 und eine äußere Nut 14 dargestellt, die sich über das Hauptstück 10, das Mittelstück 11 und das Endstück 12 erstrecken. Die Nuten 13, 14 nehmen die Stege 8, 9 (vgl. Fig. 1) auf.

Fig. 3 zeigt den Aufbau des Hauptstücks 10 des Prüfkörpers 1 genauer.

In der Axialbohrung 3 (hier nur der Bohrungsanteil 3a gezeigt) ist ein Pneumatikzylinder 15 aufgenommen. Der Pneumatikzylinder 15 dient dem Abdrücken des Prüfkörpers 1 gegen den Nutgrund und wird weiter unten genauer erläutert.

Lichtleiter 16 und Ferrulen 17 bilden jeweilige Mess-Sonden (faseroptische Abstandssensoren), die der Messung des Abstands zwischen definierten Punkten des Prüfkörpers 1 und der Nutwand dienen. Die Ferrulen 17 sind aus einem geeigneten Material wie etwa Keramik hergestellt und in Ausgängen (nicht näher dargestellt) angeordnet, die in der Trennebene zwischen den Teilstücken des Prüfkörpers 1 eingebracht sind. Die Ausgänge sind mit hoher Genauigkeit hinsichtlich Tiefe, Durchmesser und Winkel in den Prüfkörper 1 eingearbeitet. Die Lichtleiter 16 erstrecken sind von dort aus in geeigneten Rillen (nicht näher dargestellt), die von den Ausgängen aus zunächst radial nach innen und dann beidseits entlang der Axialbohrung 3 zur Anschlussfläche 2 des Prüfkörpers 1 verlaufen, wo sie zusammengefasst und zu einer Auswerteapparatur (nicht näher dargestellt) geführt werden.

Die Anordnung der Sonden ist wie folgt. Auf beiden Seiten des Prüfkörpers 1 sind in der Messfläche 5a, 6a, 7a jedes Vorsprungs 5, 6, 7 wie auch in der Bodenfläche des Prüfkörpers 1 in der Trennebene zwischen dem Hauptstück 10 und dem Mittelstück jeweils zwei Sonden 16, 17 angeordnet. Die Trennebene zwischen dem Hauptstück 10 und dem Mittelstück bildet eine Haupt-Messebene. Zusätzlich sind in der Trennebene zwischen dem Mittelstück und dem Endstück (beide in der Figur weggelassen) weitere Sonden 16, 17 auf einer Seite des Prüfkörpers 1 (der linken Seite in der Figur) angeordnet, und zwar in der oberen Messfläche 5a eine Sonde 16, 17, die in Profillängsrichtung auf einer Linie mit der inneren der beiden dort in der Haupt-Messebene vorgesehenen Sonden 16, 17 angeordnet ist, und in der Bodenfläche zwei Sonden 16, 17, die in Profillängsrichtung auf einer Linie mit den beiden dort in der Haupt-Messebene vorgesehenen Sonden 16, 17 angeordnet sind. Die Trennebene zwischen dem Mittelstück und dem Endstück bildet somit eine Sekundär-Messebene, in welcher die wenigen zusätzlichen Sensoren 16, 17 angeordnet sind.

Insbesondere bilden die Ferrulen 17 die in Fig. 1 angedeuteten Messpunkte MP, die in Fig. 3 einzeln durchnummeriert sind. Die Zuordnung der Sensoren 16, 17 bzw. der Messpunkte MP zu ihrer Lage am Prüfkörper 1 geht aus nachstehender Tabelle 1 hervor.

**Tabelle 1**

| | Rechte Seite | | Linke Seite | |
|---|---|---|---|---|
| | Innen | Außen | Innen | Außen |
| Obere Schulter 5a | MP1 | MP2 | MP18 MP19 (*) | MP17 |
| Mittlere Schulter 6a | MP3 | MP4 | MP16 | MP15 |
| Untere Schulter 5a | MP5 | MP6 | MP14 | MP13 |
| Boden (Grund) | MP8 | MP7 | MP9 MP10 (*) | MP11 MP12 (*) |

| | | | | |
|---|---|---|---|---|
| (*) in Sekundär-Messebene | | | | |

Es sind also insgesamt neunzehn Sonden bzw. Sensoren 16, 17 vorgesehen.

Die Ferrulen 17 und Lichtleiter 16 sind mit einem geeigneten Mittel wie etwa einem UV-Kleber in den Bohrungen bzw. Rillen befestigt. Die einzelnen Stücke 10, 11, 12 des Prüfkörpers 1 sind im zusammengebauten Zustand ebenfalls mit geeigneten Mitteln miteinander verbunden, so etwa verklebt oder verschraubt, ggf. zusätzlich verstiftet.

Der Pneumatikzylinder 15 weist einen Zylinderkörper 18 auf der im oberen Drittel des Prüfkörpers 1 in der Axialbohrung 3 aufgenommen ist und mittels einer oberen Führung 19 gehalten wird. Der bewegliche Teil 20 des Pneumatikzylinders 15 ist mittels eines Gewindes mit einem Stempel 21 verbunden, der sich zur Unterseite des Prüfkörpers hin erstreckt.

In Fig. 4 ist der Bereich der unteren Vorsprünge 7 gegenüber der Darstellung in Fig. 3 in leicht veränderter Perspektive, d.h., mehr von der rechten Seite aus gesehen, und in vergrößerter Ansicht dargestellt.

Gemäß der Darstellung in Fig. 4 ist der Stempel 21 in einer unteren Führung 22 gehalten und befindet sich im hier dargestellten, eingefahrenen Zustand des Pneumatikzylinders (15) innerhalb einer Austrittsbohrung 23, welche mit der Axialbohrung 3 fluchtet. Im ausgefahrenen Zustand des Pneumatikzylinders (15) ragt der Stempel 21 dagegen aus der Austrittsöffnung 21 über die Ebene der Bodenfläche 24 des Prüfkörpers 1 hinaus. Im Betrieb drückt der Stempel gegen den Nutgrund und drückt den Prüfkörper mit den Stegen 8 (Fig. 1) gegen die Anlageflächen des Nutprofils; bei idealer Ausrichtung wird der Prüfkörper so an mehreren Punkten zur Anlage gebracht. Bei dem Einsatz von drei Stegen 8 kann durch einen speziellen Anschliff derselben ein stabiler Sitz des Prüfkörpers 1 erreicht werden.

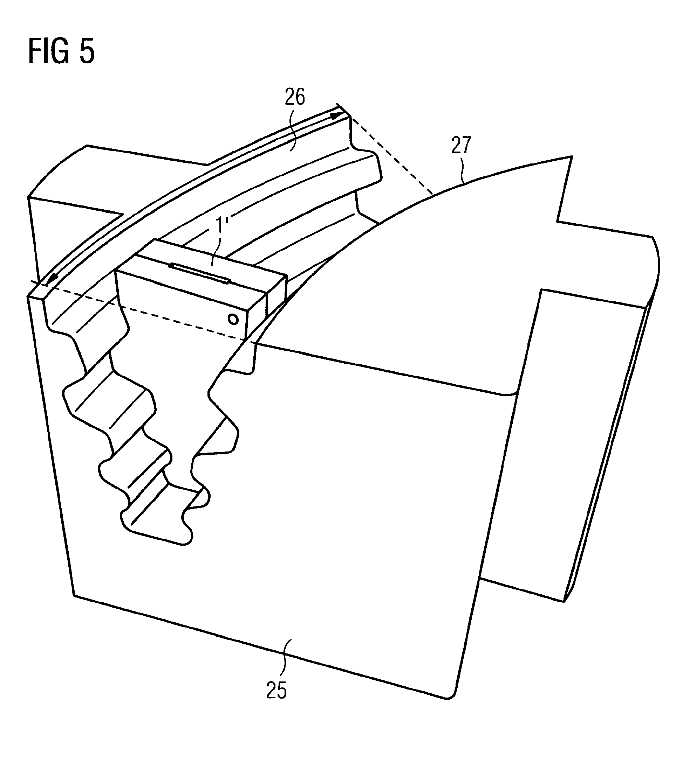

Fig. 5 zeigt die Anordnung eines Prüfkörpers 1' in einer Profilnut, die in einem Werkstückabschnitt 25 eingearbeitet ist.

Die Nut weist eine Krümmung auf und bildet somit eine konkave Flanke 26 und eine konvexe Flanke 27. Der Prüfkörper 1' ist eine Abwandlung des Prüfkörpers 1 und weist an seiner Oberseite anstelle einer Axialbohrung einen Schlitz auf, durch welchen die Lichtleiter der Abstandssensoren zu führen sind.

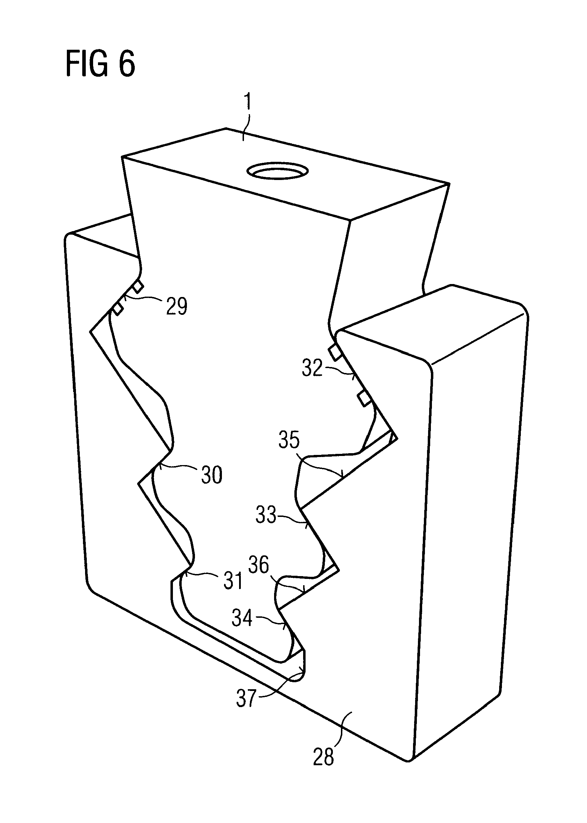

Fig. 6 zeigt die Anordnung des Prüfkörpers 1 in einem Prüfkörper 28 mit einer Profilnut von unsymmetrischem Querschnitt.

Gemäß der Darstellung in Fig. 6 weist die Nut auf der linken Nutflanke Anlageflächen 29, 30, 31 und auf der rechten Nutflanke Anlageflächen 32, 33, 34. Während auf der rechten Seite die Profilkontur dem symmetrischen "Tannenbaum"-Profil des Schaufelfußes und damit des Prüfkörpers 1 folgt, sind auf der rechten Seite Freischnitte 35, 36, 37 vorgesehen, die dem in der Nut befindlichen Körper im unfixierten Zustand eine größere Beweglichkeit verleihen.

Nachstehend wird die Ausdehnung der Prüfvorrichtung auf eine Prüfapparatur sowie deren Betriebsweise erläutert.

Eine Prüfapparatur (nicht näher dargestellt) weist eine verfahrbare Halterung, eine Steuergerät mit Ansteuerungs- und Auswerteelektronik auf und eine Druckerzeugungseinrichtung zur Erzeugung des erforderlichen Drucks für den Pneumatikzylinder auf. Das Steuergerät weist den an sich bekannten Aufbau eines Computers mit CPU, RAM, ROM, internem und/oder externem Speicher, einem I/O-Bus zur Kommunikation mit Peripheriegeräten zur Eingabe von Daten und Befehlen und zur Ausgabe von Daten, einen Netzwerkanschluss und dergleichen auf. Die Halterung weist Stellglieder wie Pneumatik- oder Hydraulikzylinder, Motoren, Getriebe oder dergleichen und geeignete Übertragungsglieder sowie Weg- und Winkelgeber an sich bekannter Art auf. Ferner sind Einrichtungen zur Rückkopplung von Bewegungswiderständen vorgesehen, wie etwa durch direkte Kraft- oder Momentenmessung oder durch Messung des Motormoments, der Motorspannung oder -leistung, des pneumatischen oder hydraulischen Drucks, oder dergleichen.

Zunächst wird der Prüfkörper 1 in die verfahrbare Halterung eingespannt und in die Nut eingeführt. Sodann wird der Prüfkörper 1 an einen vorbestimmten Prüfquerschnitt verfahren und dort mittels des Pneumatikzylinders 15 mit einer vorgegebenen Kraft fixiert. Die Abstandssensoren werden aktiviert und die Antwortsignale empfangen. Die Antwortsignale werden in der Auswerteelektronik in Abstandswerte umgerechnet und hieraus unter Zugrundelegung der vorab gespeicherten Profilgeometrie des Prüfkörpers 1 die Geometrie des Prüfquerschnitts berechnet.

Bei der Auswertung der Messwerte wird aus dem Abstand der Sensoren in der Bodenfläche die Nutbreite berechnet, werden aus den Abständen der sonstigen Sensoren in der Hauptmessebene die relative Lage der Anlageflächen in den ausgewählten Messpunkten (MP) sowie die mittlere Winkellage der Anlageflächen berechnet, und werden aus den Abständen der Sensoren in der Sekundärmessebene Fehlstellungen des Prüfkörpers berechnet.

Die Anordnung der Nuten 13, 14 mit darin eingesetzten Stegen 8, 9 ist rein beispielhaft. In Abwandlungen können mehr oder weniger Stege verwendet werden. Es können sich auch Stege quer zur Profillängsrichtung erstrecken, je nachdem, wie es für einen sicheren Sitz in der Nut vorteilhaft ist. Besonders bevorzugt sind drei speziell geformte Stege, wobei z.B. auf der konkaven Seite der Nut ein Längssteg angeordnet ist und auf der konvexen Seite der Nut zwei Querstege angeordnet sind. Auch andere Anordnungen sind denkbar. Speziell bei drei Stegen kann durch einen speziellen Anschliff der Stege ein stabiler Sitz der Prüfvorrichtung über drei Anlagepunkte (und den Stempel 21 am Nutgrund als vierten Anlagepunkt) erreicht werden.

Die Anordnung der Abstandssensoren kann je nach Bedarf verändert werden.

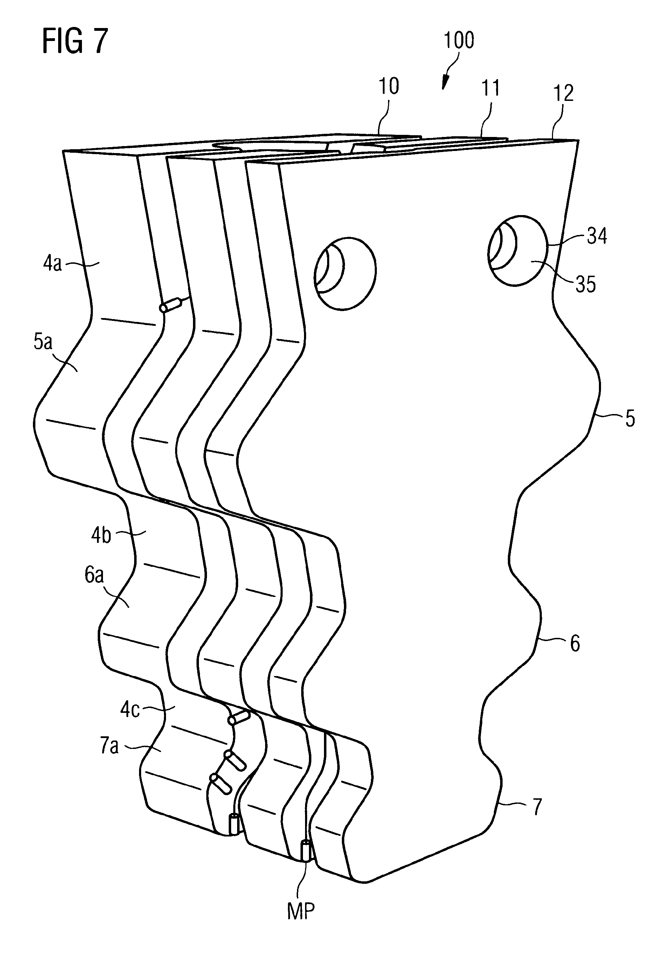

In Fig. 7 bis 9 ist ein Prüfkörper 100 als zweites Ausführungsbeispiel der Erfindung gezeigt. Die für das erste Ausführungsbeispiel gezeigten und beschriebenen Verfahrensweisen und Überlegungen sind, soweit sich aus nachstehender Beschreibung nichts anderes ergibt, auf dieses zweite Ausführungsbeispiel anwendbar.

Der Prüfkörper 100 dieses Ausführungsbeispiels ist gemäß der Explosionsansicht in Fig. 7 in seiner Grundform wie der Prüfkörper 1 des ersten Ausführungsbeispiels mit symmetrisch-trapezförmigem Grundquerschnitt, von welchem die seitlichen Vorsprünge 5, 6, 7 abragen, aufgebaut und ebenfalls aus Hauptstück 10, Mittelstück 11 und Endstück 12, die jeweils die gleiche prismatische Kontur aufweisen und in Profilrichtung aneinanderliegen. Für die in der Mittelachse liegende Bohrung und die Abdrückeinrichtung ist auf die vorstehende Beschreibung des ersten Ausführungsbeispiels zu verweisen.

Für die Zwecke der nachstehenden Beschreibung werden hier die trapezförmigen Flanken des Prüfkörpers in eine obere Flanke 4a, eine mittlere Flanke 4b und eine untere Flanke 4c unterschieden.

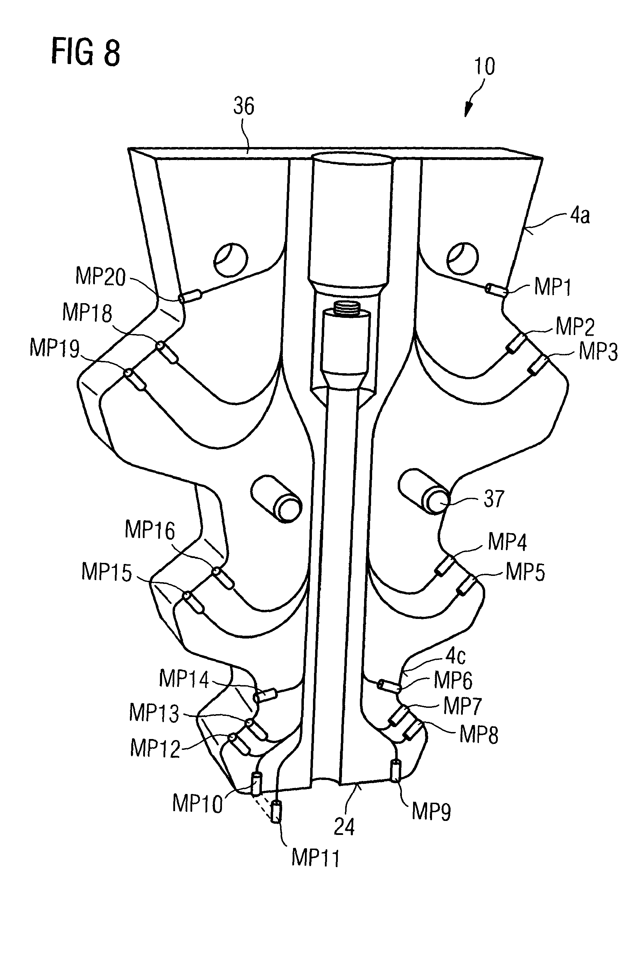

In Fig. 7 sind in dem Endstück 12 zwei sich in Profillängsrichtung erstreckende Bohrungen 38 mit jeweiliger Ansenkung 39 zu erkennen. Obschon in der Figur nicht erkennbar, fluchten diese Bohrungen mit entsprechenden Bohrungen in dem Mittelstück 11 und Gewindebohrungen 40 (s. Fig. 8) in dem Hauptstück 10. Diese Bohrungsanordnung dient der Aufnahme von Befestigungselementen wie etwa Schrauben, die von der Stirnseite des Endstücks 12 aus eingeführt und in der Gewindebohrung 36 verschraubt werden. (In einer nicht lösbaren Abwandlung ist anstelle der Gewindebohrung 40 eine einfache Bohrung, gegebenenfalls mit einer Gegensenkung auf der Rückseite, vorgesehen, und werden Niete zur unlösbaren Verbindung der Stücke 10, 11, 12 verwendet.) Eine Zentrierung der Stücke 10, 11, 12 erfolgt über Stifte 41 (vgl. Fig. 8), die sich durch das Mittelstück 11 hindurch erstrecken und in Sackbohrungen (nicht näher dargestellt) in dem Hauptstück 10 und dem Endstück 12 sitzen. Anstelle einer Verschraubung oder dergleichen ist es auch denkbar, die Bauteile z.B. mittels eines PU-Klebers oder dergleichen zu verbinden.

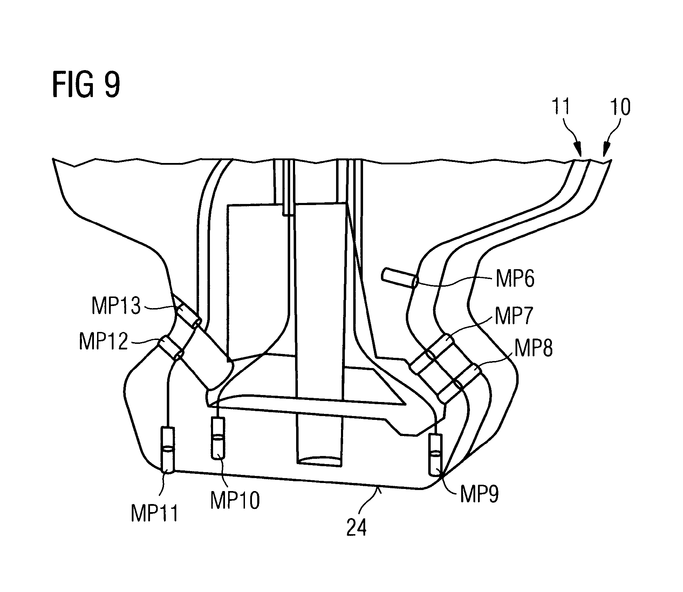

Fig. 9 zeigt den Bereich der Bodenfläche 24 in vergrößerter Darstellung.

Der Wesentliche Unterschied zwischen dem Prüfkörper 100 und dem Prüfkörper 1 liegt in der Anordnung der Abstandssensoren bzw. Messpunkte (vgl. Fig. 8 und 9). (Wegen der unterschiedlichen Anordnung verschiebt sich auch die Zählung der Messpunkte.)

Die Staffelung (Doppelbesetzung) der Abstandssensoren in der Bodenfläche 24 entfällt. Somit sind in der Bodenfläche 24 in der Primär-Messebene nur zwei Abstandssensoren (links und rechts jeweils einer) in den Messpunkten MP9 und MP10 und in der Sekundär-Messebene nur ein Abstandssensor in dem Messpunkt MP11 vorhanden. Es entfallen hier also drei Messpunkte. Die verbleibenden Messpunkte liegen im äußeren Bereich, um über einen möglichst großen Abstand eine gute Winkelauflösung zu erhalten. Die o. g. Anordnung bietet sich z.B. bei weiten Messbereichen an, während bei engerem Messbereich in den jeweiligen Teilbereichen der Bodenfläche 24 zwei Abstandssensoren (wie im ersten Ausführungsbeispiel) erforderlich sein können.

Ferner sind in der oberen Flankenfläche 4a und der unteren Flankenfläche 4c links und rechts jeweils ein weiterer Abstandssensor, mithin vier weitere Messpunkte MP1, MP6, MP14, MP20 vorgesehen (es wird nochmals darauf hingewiesen, dass die Zählung nicht mit derjenigen des ersten Ausführungsbeispiels übereinstimmt). Mit diesen zusätzlichen Messpunkten ist auch eine isolierte Ermittlung des Konuswinkels möglich.

Es sind also insgesamt 20 Messpunkte MP1 bis MP20 vorhanden, die sich gemäß nachstehender Tabelle 3 verteilen:

**Tabelle 3**

| | Rechte Seite | | Linke Seite | |
|---|---|---|---|---|
| | Innen | Außen | Innen | Außen |
| Obere Flanke 4a | MP1 | | MP20 | |
| Obere Schulter 5a | MP2 | MP3 | MP18 MP19 (*) | MP17 |
| Mittlere Schulter 6a | MP4 | MP5 | MP16 | MP15 |
| Untere lanke 4c | MP6 | | MP14 | |
| Untere Schulter 7a | MP7 | MP8 | MP13 | MP12 |
| Boden (Grund) 24 | | MP9 | | MP10 MP11 (*) |

| | | | | |
|---|---|---|---|---|
| (*) in Sekundär-Messebene | | | | |

Es versteht sich, dass je nach Anforderungen und Messmöglichkeiten auch andere Anordnungen der Messpunkte möglich sind, die jedoch vom grundlegenden Gedanken der Erfindung abgedeckt sind.

Der Prüfkörper 1 ist auch ohne verfahrbare Halterung einsetzbar. Und zwar kann der Prüfkörper 1 auch manuell in die zu prüfende Nut eingeführt und an den gewünschten Prüfquerschnitt bewegt werden, kann dann der Pneumatikzylinder aktiviert werden und die Messung ausgelöst werden.

Je nach erforderlichem Abstand der Sekundärebene kann der Prüfkörper auch Messpunkte in weiteren Messebenen zusätzlich zu der Hauptmessebene und der Sekundärmessebene aufweisen. Hierzu kann der Prüfkörper 1 mehr als drei Teilkörper aufweisen.

Es versteht sich, dass die vorgeschlagene Prüfvorrichtung für andere Nutformen lediglich einer Änderung der Querschnittsgeometrie bedarf.

Zusammenfassend ermöglicht die vorgeschlagene Prüfvorrichtung die Messung der relevanten Kenngrößen, also der Tragschulterabstände und -winkel sowie der Nutbreite. Diese Kenngrößen sind nicht nur für das korrekte Einsetzen der Schaufelfüße, sondern auch für eine gleichmäßige Lastenverteilung im späteren Betrieb bedeutend.

Durch den Einsatz der vorgeschlagenen Prüfvorrichtung für Profilnuten wird es ermöglicht, aktuelle Schneidstoffe für Fräser wirtschaftlich sinnvoll einzusetzen. Mit dem Einsatz von Hartmetall als Schneidstoff kann der Zeitbedarf zum Herstellen der Profilnuten entscheidend reduziert werden.

Darüber hinaus kann die Prüfvorrichtung für Profilnuten auch zur Analyse bestehender Prozesse eingesetzt werde, bei denen bisher auf die Werkzeuggeometrie referenziert wurde. Auf der Basis der gewonnenen Erkenntnisse können Optimierungsschritte für den Prozess abgeleitet werden.

## Patentansprüche

1. Prüfvorrichtung zur Prüfung des Querschnittsprofils von Profilnuten, insbesondere von Tannennuten, aufweisend:
einen im Wesentlichen prismatischen Prüfkörper (1) mit einem Querschnittsprofil, das dem Querschnittsprofil der zu prüfenden Profilnut wenigstens in interessierenden Konturabschnitten, insbesondere Tragschultern (5) und Nutgrund der Tannennuten, nachempfunden ist,
wobei die Querschnittsgröße des Prüfkörpers (1) kleiner als diejenige der Nut ist, und
eine Gruppe von Abstandssensoren (16, 17), die in Messflächen (5a, 6a, 7a) des Prüfkörpers (1), vorzugsweise senkrecht zu diesen, angeordnet sind,
wobei die Messflächen (5a, 6a, 7a) interessierenden Konturabschnitten der Profilnut entsprechen.

2. Prüfvorrichtung nach Anspruch 1,
**dadurch gekennzeichnet,**
**dass** die Abstandssensoren (16, 17) in einer Querschnittsebene des Prüfkörpers (1), vorzugsweise in der mittleren Querschnittsebene des Prüfkörpers, angeordnet sind.

3. Prüfvorrichtung nach Anspruch 2,
**dadurch gekennzeichnet,**
**dass** wenigstens eine weitere Gruppe von Abstandssensoren (16, 17) vorgesehen ist,
wobei die Abstandssensoren (16, 17) jeder weiteren Gruppe in einer zu der Querschnittsebene der Abstandssensoren (16, 17) parallelen, zweiten Querschnittsebene des Prüfkörpers angeordnet sind.

4. Prüfvorrichtung nach einem der vorstehenden Ansprüche, **dadurch gekennzeichnet,**
**dass** mehrere Teilkörper (10, 11, 12) gleichen Querschnitts miteinander verbunden sind, um den Prüfkörper (1) auszubilden,
wobei die Abstandssensoren (16, 17) jeweils in der Verbindungsebene zweier Teilkörper (10, 11, 12) angeordnet sind.

5. Prüfvorrichtung nach Anspruch 4,
**dadurch gekennzeichnet,**
**dass** in den Verbindungsflächen der Teilkörper (10, 11, 12) Ausnehmungen und Rillen zur Aufnahme der Abstandssensoren (16, 17) und von Zuleitungen ausgebildet sind.

6. Prüfvorrichtung nach Anspruch 4 oder 5,
**dadurch gekennzeichnet,**
**dass** die Teilkörper (10, 11, 12) miteinander und/oder die Abstandssensoren (16, 17) in den Verbindungsflächen mittels PU-Kleber verklebt sind.

7. Prüfvorrichtung nach einem der vorstehenden Ansprüche, **dadurch gekennzeichnet,**
**dass** die Querschnittsform des Prüfkörpers (1) eine im wesentlichen trapezförmige Grundform ist,
wobei die schrägen Seiten den Nutflanken entsprechen, wobei die schmale der parallelen Seiten dem Nutgrund entspricht und eine Messfläche definiert, und mehrere, vorzugsweise zwei oder drei, von den schrägen Seiten abragenden, sich nach außen verjüngenden und zum Nutgrund hin kleiner werdenden Vorsprüngen (5, 6, 7) aufweist,
wobei die nach oben weisenden Seiten der Vorsprünge (5, 6, 7) jeweils eine Messfläche (5a, 6a, 7a) definieren.

8. Prüfvorrichtung nach Anspruch 7,
**dadurch gekennzeichnet,**
**dass** in der zweiten Messebene in der dem Nutgrund entsprechenden Messfläche wenigstens zwei Abstandssensoren (16, 17) angeordnet sind.

9. Prüfvorrichtung nach Anspruch 7,
**dadurch gekennzeichnet,**
**dass** auch Messflächen vorgesehen sind, die jeweils einem Konusabschnitt, insbesondere einem oberen und einem unteren Konusabschnitt der Nut, entsprechen,
wobei in jeder einem Konusabschnitt der Nut entsprechenden Messfläche wenigstens ein Abstandssensor (16, 17) vorgesehen ist,
wobei vorzugsweise in der zweiten Messebene in der dem Nutgrund entsprechenden Messfläche genau ein Abstandssensor (16, 17) angeordnet ist.

10. Prüfvorrichtung nach Anspruch 9,
weiter **gekennzeichnet**
**durch** eine Abdrückeinrichtung zum Abdrücken des Prüfkörpers (1) vom Nutgrund.

11. Prüfvorrichtung nach Anspruch 10,
**dadurch gekennzeichnet,**
**dass** die Abdrückeinrichtung einen in einer Axialbohrung des Prüfkörpers (1) eingesetzten Pneumatikzylinder (15) und einen Stempel (21), der mittels der Wirkung des Pneumatikzylinders (15) von der Bodenfläche des Prüfkörpers (1) ausfahrbar ist, aufweist.

12. Prüfvorrichtung nach einem der Ansprüche 7 bis 11,
**dadurch gekennzeichnet,**
**dass** in den oberen Messflächen jeweils ein oder zwei Nuten ausgebildet sind, in welchen jeweils ein Einsatz (8, 9) aus einem verschleißfesten Material angeordnet und befestigt ist,
wobei die Einsätze (8, 9) sich geringfügig über die Messflächen erheben und vorzugsweise austauschbar sind.

13. Prüfvorrichtung nach einem der vorstehenden Ansprüche, **dadurch gekennzeichnet,**
**dass** die Abstandssensoren faseroptische Abstandssensoren sind, deren Ferrulen (17) sich in den Messflächen öffnen und deren Lichtleitfasern (16) im Inneren des Prüfkörpers (1) verlegt sind.

14. Prüfvorrichtung nach Anspruch 13,
**dadurch gekennzeichnet,**
**dass** die Ferrulen (17) aus einem keramischen Material hergestellt sind und die Lichtleitfasern (16) darin fixiert sind.

15. Prüfapparatur zur Prüfung des Querschnittsprofils von Profilnuten, insbesondere von Tannennuten, aufweisend:
einen Prüfkörper (1) nach einem der vorstehenden Ansprüche; und
ein Steuergerät, das zum Ansteuern der Abstandssensoren (16, 17) und ggf. der Abdrückeinrichtung, zum Empfangen und Auswerten von Signalen von den Abstandssensoren (16, 17),
und zum Ausgeben von Auswertungsergebnissen eingerichtet ist.

16. Prüfapparatur nach Anspruch 15,
weiter **gekennzeichnet**
**durch** eine Speichereinrichtung zum Speichern der Auswertungsergebnisse.

17. Verfahren zum Prüfen des Querschnittsprofils von Profilnuten, insbesondere von Tannennuten, mit den Schritten:
Einsetzen eines Prüfkörpers (1) nach einem der Ansprüche 1 bis 14 in die Profilnut;
Bewegen des Prüfkörpers (1) entlang der Nutlängsrichtung bis zu einem vorbestimmten Prüfquerschnitt;
Bewegen des Prüfkörpers (1) in vertikaler Richtung bis zu einem Aufsetzen des Prüfkörpers (1) an dem Nutprofil;
Aktivieren der Abstandssensoren (16, 17) und Empfangen von Signalen von diesen; und
Ermitteln und vorzugsweise Ausgeben eines Abstandswerts für jeden Abstandssensor (16, 17).

18. Verfahren nach Anspruch 17,
weiter **gekennzeichnet**
**durch** einen Schritt eines Speicherns der Abstandswerte.
